# EUROPÄISCHE PATENTSCHRIFT

(11) **EP 3 467 052 B1**
(45) Veröffentlichungstag und Bekanntmachung des Hinweises auf die Patenterteilung: **13.04.2022**
(21) Anmeldenummer: 17195099.1
(22) Anmeldetag: 06.10.2017
(51) Int. Cl.: C09D 5/02, C09D 7/43, C09D 7/44, C09D 7/61, C09D 7/63, C09D 7/40

(54) **WÄSSRIGE DISPERSION ENTHALTEND SILIZIUMDIOXID UND TRIMETHYL 1,6-HEXAMETHYLENDIAMIN**
AQUEOUS DISPERSION CONTAINING SILICON DIOXIDE AND TRIMETHYL 1.6-HEXAMETHYLENDIAMINE
DISPERSION AQUEUSE CONTENANT DE LA SILICE ET TRIMÉTHYLE 1.6 HEXAMÉTHYLÈNEDIAMINE

(43) Veröffentlichungstag der Anmeldung: 10.04.2019
(73) Patentinhaber: Evonik Operations GmbH, 45128 Essen (DE)
(72) Erfinder: MICHAEL, Günther, 63791 Karlstein (DE); BAUERMANN, Peter, 63110 Rodgau (DE); HERRWERTH, Sascha, 63579 Freigericht (DE)
(74) Vertreter: Evonik Patent Association

(56) Entgegenhaltungen:
- WO-A1-91/12204
- WO-A1-94/18277
- DE-A1- 2 524 309
- DATABASE WPI Week 201776 Thomson Scientific, London, GB; AN 2017-61076W XP002776361, & CN 107 099 209 A (FOSHAN LINGXIN INFORMATION TECHNOLOGY CO LTD) 29. August 2017 (2017-08-29)
- DATABASE WPI Week 201662 Thomson Scientific, London, GB; AN 2016-34980T XP002776362, -& CN 105 602 310 A (ZHEJIANG MINGJIANG IND CO LTD) 25. Mai 2016 (2016-05-25)
- DATABASE WPI Week 201622 Thomson Scientific, London, GB; AN 2015-80045U XP002776363, -& CN 105 111 987 A (UNIV CHONGQING ARTS & SCI) 2. Dezember 2015 (2015-12-02)
- Anonymous: "Evonik for composites; Products for efficiency and performance", , 1. April 2008 (2008-04-01), Seiten 1-28, XP055042093, Gefunden im Internet: URL:http://composites.evonik.com/sites/dc/ Downloadcenter/Evonik/Product/Composites/C omposites_16_03_10_Doppel.pdf [gefunden am 2012-10-24]

## Beschreibung

Die vorliegende Erfindung betrifft wässrige Dispersionen enthaltend Siliziumdioxid und Trimethyl 1,6-Hexamethylendiamin, ein Verfahren zur deren Herstellung und deren Verwendung in Lackzubereitungen.

Siliziumdioxid wird oft zur Einstellung der rheologischen Eigenschaften in flüssigen Systemen verwendet. So können beispielsweise Siliziumdioxidpartikel in lösungsmittelbasierten Farben und Lacken eingesetzt werden um deren Ablauf vor der Härtung an senkrechten Flächen zu verhindern oder dem Absetzen der Pigmente in solchen Lacken entgegenwirken. Solche rheologischen Effekte basieren auf der Bildung von Wasserstoffbrückenbindungen zwischen Silanolgruppen an den benachbarten Kieselsäurepartikeln. Hydrophile Kieselsäure hat den größten Verdickungs- und Thixotropierungseffekt in unpolaren Flüssigkeiten, das heißt Flüssigkeiten mit einer kleinen Menge inhärenter Wasserstoffbrückenbindungen. Die inhärenten Wasserstoffbrückenbindungen eines flüssigen Mediums können die Bildung von Wasserstoffbrückenbindungen zwischen Silanolgruppen der Kieselsäure stören und den Verdickungseffekt reduzieren. In mäßig polaren Systemen wie einigen Epoxidharzen ist der Verdickungseffekt immer noch ziemlich stark. In WO 2009/068379 A1 werden die hydrophilen gefällten Kieselsäuren offenbart, die eine erhöhte Verdickungswirkung in unpolaren und mäßig polaren Systemen, beispielsweise UPE-Formulierungen, aufweisen. In hochpolaren Systemen wie niedermolekularen Alkoholen oder Wasser haltigen Systemen ist hydrophile Kieselsäure bei der Verdickung und Erzeugung von Thixotropie jedoch oft ineffizient.

In wässrigen Systemen wie beispielsweise Emulsionen, Dispersionen sind die hydrophilen Kieselsäuren meistens ineffizient, wenn eine relativ niedrige Konzentration an Siliziumdioxid als Verdickungsmittel eingesetzt wird. Allerdings kann die verdickende Wirkung der Kieselsäure erheblich gesteigert werden, indem man spezielle Additive verwendet.

Es ist bekannt, dass diverse Amine an der Oberfläche von pyrogen hergestelltem Siliziumdioxid in wässrigen Dispersionen adsorbiert werden können (Archiv der Pharmazie, 1987, Band 320, S. 1-15). Dieser Effekt wird zur Herstellung hochgefüllter, mit Ammoniak stabilisierten wässrigen Dispersionen mit einer niedrigen Viskosität verwendet. So offenbart WO 2012/062559 A1 solche wässrigen Dispersionen enthaltend unter anderem hydrophobierte Siliziumdioxidpartikel und Aminoalkohole, die niedrige Viskositäten bei höheren Feststoffbeladungen aufweisen.

In WO 2016/095196 werden wässrige Lackzubereitungen umfassend kolloidales Siliziumdioxid und diverse Amine offenbart. Auf Seite 23 wird Bezug auf die Tabelle 4 genommen und darauf hingewiesen, dass Diamine wie JEFFAMINE D203, Isophorondiamin (IPD) und N,N'-Diethyl-1,3-propanediamin eine im Vergleich zu Monoaminen höhere Verdickung (Viskositätsanstieg) in den wässrigen Dispersionen hervorrufen. Dabei befinden sich in der Lackzubereitung des Vergleichsbeispiels M beispielsweise 7,6 Gew.-% SiO₂ und 0,4 Gew.-% IPD (SiO₂/Amin = 53,9 mol/mol; SiO₂/Wasser = 0,04 mol/mol).

Die Aufgabe der vorliegenden Erfindung ist es ein Wasser haltiges System bereitzustellen, welches eine im Vergleich zu den bekannten Systemen höhere Viskosität bei einem relativ geringen Feststoffgehalt aufweist.

Diese Aufgabe wurde durch eine wässrige Dispersion, umfassend Siliziumdioxid und 2,2,4-Trimethyl 1,6-Hexamethylendiamin und/oder 2,4,4-Trimethyl 1,6-Hexamethylendiamin, entsprechend Anspruch 1 gelöst. Überraschenderweise hat sich nun gezeigt, dass die oben genannten Amine eine im Vergleich zu den anderen, strukturell sehr ähnlichen Diaminen, eine viel höhere Viskosität der wässrigen Dispersion bei einem relativ geringen Gehalt an Siliziumdioxid aufweisen. Die erfindungsgemäße Dispersion enthält Durch Fällung hergestelltes Siliziumdioxid (gefällte Kieselsäure, Fällungskieselsäure) bildet sich beispielsweise bei der Umsetzung von Wasserglas-Lösungen (wasserlösliche Natriumsilikate) mit Mineralsäuren. Dabei kann auch ein kolloidales Siliziumdioxid in der Lösung aus Natriumsilikat erzeugt werden (Silica-Sol), das Dispersionen mit sehr kleinen Teilchengrößen und sehr guter Dispersionsstabilität liefert. Nachteilig, besonders beim Polieren von Halbleitersubstraten, ist der Anteil an Verunreinigungen, eingebracht durch das Ausgangsmaterial Natriumsilikat.

Pyrogen hergestelltes Siliziumdioxid, auch pyrogene Kieselsäure genannt, wird mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet dafür ist Siliziumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf unter Bildung eines dreidimensionalen Netzwerkes fest miteinander verbinden. Die Primärpartikel sind weitestgehend porenfrei und weisen auf ihrer Oberfläche freie Hydroxylgruppen auf. Pyrogenes Siliziumdioxid zeigt eine sehr hohe Reinheit und eine dem kolloidalen Siliziumdioxid vergleichbare Primärteilchengröße. Diese Primärteilchen aggregieren und agglomerieren jedoch, wobei relativ harte Partikel entstehen. Die Dispergierung der Aggregate und Agglomerate erweist sich als schwierig, die Dispersionen sind weniger stabil und neigen zur Sedimentation oder auch zum Gelieren. Eine weitere für die Herstellung der Dispersionen geeignete Siliziumdioxidquelle ist ein durch ein Sol-Gelprozess hergestelltes Siliziumdioxid, beispielsweise ein Aerogel, ein Xerogel oder ähnliche Materialien. Bei den Ausgangsmaterialien für eine SiO₂-Solsynthese handelt es sich oft um Siliziumalkoholate. Die Hydrolyse von solchen Vorstufen und die Kondensation zwischen den dabei entstehenden reaktiven Spezies, sind die wesentlichen Grundreaktionen des Sol-Gel-Prozesses. Als Siliciumquelle eignen sich insbesondere die Tetraalkylorthosilikate wie beispielsweise Tetramethylorthosilikat oder Tetraethylorthosilikat. Die Entfernung des bei der Hydrolyse von Tetraalkylorthosilikate entstehenden Alkohols findet unter überkritischen Bedingungen (für Methanol, Temperatur > 239,4 °C; Druck > 80,9 bar) statt und führt zur Bildung hochporösen SiO₂-Aerogelen.

Im Vergleich zu den typischen Fällungskieselsäuren ist eine pyrogen hergestellte Kieselsäure effizienter bei der Steigerung der Viskosität, stellt eine bessere Suspensionsstabilität in niederviskosen Harzen bereit und führt zu besserer Klarheit. Zu den Vorteilen von Fällungskieselsäure im Vergleich zu pyrogen hergestellter Kieselsäure gehören schnellere und scherunabhängige Dispergierung, niedrigere Kosten, besserer Verlauf der Beschichtung oder des Gusses, geringere Porosität in Gelcoats. Infolgedessen wird in zahlreichen Fällen eine Mischung von pyrogen hergestellter Kieselsäure und Fällungskieselsäure verwendet, um die Vorteile beider Kieselsäuretypen zu erhalten.

In der erfindungsgemäßen Dispersion werden jedoch eine oder mehrere pyrogen hergestellte Kieselsäuren eingesetzt. Die Dispersion gemäß der vorliegenden Erfindung kann von 1 bis 50 Gew.-%, besonders bevorzugt von 1 bis 30 Gew.-% Siliziumdioxid enthalten. Dabei liegt das Molarverhältnis von SiO₂ zu Wasser in der erfindungsgemäßen Dispersion vorzugsweise von 0,001 bis 0,5, besonders bevorzugt von 0,005 bis 0,2, ganz besonders bevorzugt von 0,01 bis 0,1.

Das in der erfindungsgemäßen Dispersion enthaltende Siliziumdioxid ist vorzugsweise hydrophil.

Der Begriff "hydrophil" im Sinne der vorliegenden Erfindung bezieht sich auf die Partikel mit einer relativ hohen Affinität zu polaren Medien wie Wasser, die eine relativ geringe Hydrophobizität aufweisen. Eine solche Hydrophobizität kann üblicherweise durch die Aufbringung entsprechender unpolaren Gruppen an die Kieselsäureoberfläche erreicht werden. Das Ausmaß der Hydrophobizität einer Kieselsäure kann unter anderem durch ihre Methanolbenetzbarkeit bestimmt werden, wie beispielsweise in WO2011/076518 A1, Seiten 5-6, näher beschrieben. In reinem Wasser, trennt sich eine hydrophobe Kieselsäure vollständig vom Wasser ab und schwimmt auf dessen Oberfläche ohne mit dem Lösungsmittel zu benetzen. In reinem Methanol dagegen, verteilt sich eine hydrophobe Kieselsäure im ganzen Lösungsmittelvolumen, es findet eine vollständige Benetzung statt. Bei der Messung der Methanolbenetzbarkeit wird ein maximaler Gehalt an Methanol in einem Methanol-Wasser Testgemisch bestimmt, bei dem noch keine Benetzung der Kieselsäure stattfindet, also 100% der eingesetzten Kieselsäure sich nach dem Kontakt mit dem Testgemisch von dem Testgemisch separiert, nicht benetzt bleibt. Dieser Gehalt an Methanol in dem Methanol-Wasser Gemisch in Gew.-% wird Methanolbenetzbarkeit genannt. Je höher eine solche Methanolbenetzbarkeit, desto hydrophober ist die Kieselsäure. Je niedriger die Methanolbenetzbarkeit, desto geringer ist die Hydrophobie und desto höher ist die Hydrophilie des Materials.

Das in der erfindungsgemäßen Dispersion eingesetzte Siliziumdioxid weist eine Methanolbenetzbarkeit von kleiner 20, bevorzugt von 0 bis 15, besonders bevorzugt von 0 bis 10, ganz besonders bevorzugt von 0 bis 5 Gew.-% Methanol in einem Methanol-Wasser Gemisch auf.

Das in der erfindungsgemäßen Dispersion eingesetzte Siliziumdioxid kann eine Hydroxylgruppendichte von 1,2 bis 5,4 OH/nm², bevorzugt von 1,5 bis 3,0 OH/nm², besonders bevorzugt von 1,8 bis 2,5 OH/nm² aufweisen. Die Hydroxylgruppendichte kann dabei nach der von J. Mathias und G. Wannemacher in Journal of Colloid and Interface Science 125 (1988) veröffentlichten Methode durch Reaktion mit Lithiumaluminiumhydrid bestimmt werden. Wie in der gerade erwähnten Publikation ausgeführt ist, weist die Oberfläche des flammenhydrolytisch hergestellten, unbehandelten Siliziumdioxidpulvers eine Hydroxylgruppendichte von ca. 1,8 bis 2,5 OH/nm² auf. Aus WO 2004/020334 A1 ist beispielsweise bekannt, wie Kieselsäuren mit einer erhöhten Hydroxylgruppendichte von 2,5 bis 5,4 OH/nm² erhalten werden können. Eine geringere als 1,8 OH/nm² Hydroxylgruppendichte kann beispielsweise durch eine teilweise Hydrophobierung der freien Silanolgruppen mit einem geeignete Hydrophobierungsmittel erreicht werden. Das Hydrophobierungsmittel kann eine siliziumhaltige Verbindung enthalten, die bevorzugt aus der Gruppe bestehend aus Halogensilanen, Alkoxysilanen, Silazanen oder Siloxanen ausgewählt wird.

Bei einer solchen siliziumhaltigen Verbindung handelt es sich besonders bevorzugt um eine flüssige Verbindung mit wenigstens einer Alkylgruppe und einem Siedepunkt von weniger als 200°C. Sie wird bevorzugt aus der Gruppe bestehend aus CH₃SiCl₃, (CH₃)₂SiCl₂, (CH₃)₃SiCl, C₂H₅SiCl₃, (C₂H₅)₂SiCl₂, (C₂H₅)₃SiCl, C₃H₈SiCl₃, CH₃Si(OCH₃)₃, (CH₃)₂Si(OCH₃)₂, (CH₃)₃SiOCH₃, C₂H₅Si(OCH₃)₃, (C₂H₅)₂Si(OCH₃)₂, (C₂H₅)₃SiOCH₃, C₈H₁₅Si(OC₂H₅)₃, C₈H₁₅Si(OCH₃)₃, (H₃C)₃SiNHSi(CH₃)₃ und Mischungen hiervon ausgewählt. Besonders bevorzugt sind (H₃C)₃SiNHSi(CH₃)₃ und (CH₃)₂SiCl₂.

Die Dispersion der vorliegenden Erfindung ist basisch und weist einen pH Wert von 10 bis 12 auf.

Die Dispersion gemäß der vorliegenden Erfindung kann von 0,01 bis 10 Gew.-%, besonders bevorzugt von 0,1 bis 7 Gew.-%, ganz besonders bevorzugt von 0,5 bis 5 Gew.-% von 2,2,4-Trimethyl 1,6-Hexamethylendiamin und/oder 2,4,4-Trimethyl 1,6-Hexamethylendiamin enthalten.

In einer besonders bevorzugten Ausführungsform der Erfindung enthält die erfindungsgemäße Dispersion sowohl 2,2,4-Trimethyl-1,6-Hexamethylendiamin als auch 2,4,4-Trimethyl-1,6-Hexamethylendiamin, wobei das Molarverhältnis von 2,2,4-Trimethyl-1,6-Hexamethylendiamin zu 2,4,4-Trimethyl-1,6-Hexamethylendiamin von 0,5 bis 1,5, besonders bevorzugt von 0,8 bis 1,2, ganz besonders bevorzugt von 0,9 bis 1,1 beträgt. Besonders bevorzugt wird zur Herstellung der erfindungsgemäßen Dispersion ein Isomerengemisch von 2,2,4-Trimethyl-1,6-Hexamethylendiamin und 2,4,4-Trimethyl-1,6-Hexamethylendiamin mit nahezu gleichen Anteilen von circa 50 Gew.-% an beiden Aminen verwendet, das beispielsweise unter dem Namen VESTAMIN^{®} TMD von Evonik Ressource Efficiency GmbH erhältlich ist.

Es hat sich als besonders vorteilhaft erwiesen, wenn das Molarverhältnis von Siliziumdioxid zu 2,2,4-Trimethyl 1,6-Hexamethylendiamin und/oder 2,4,4-Trimethyl 1,6-Hexamethylendiamin in der erfindungsgemäßen Dispersion von 1 bis 1000, besonders bevorzugt von 5 bis 200, ganz besonders bevorzugt von 10 bis 100 beträgt.

Weiterhin hat es sich als vorteilhaft erwiesen, wenn Siliziumdioxidpartikel in der erfindungsgemäßen Dispersion eine nummerische mittlere Partikelgröße d₅₀ von höchstens 300 nm aufweisen. Besonders bevorzugt ist ein Bereich von 100 bis 250 nm. Eine nummerische mittlere Partikelgröße kann dabei nach ISO13320:2009 durch Laserbeugungs-Partikelgrößenanalyse bestimmt werden.

Als hydrophile, pyrogen hergestellte Siliziumdioxide können hydrophile, pyrogen hergestellte Siliziumdioxide eingesetzt werden, die eine BET-Oberfläche von 20 bis 500 m²/g, bevorzugt von 30 bis 400 m²/g aufweisen. Besonders bevorzugt können hydrophile, pyrogen hergestellte Siliziumdioxide eingesetzt werden, die eine BET-Oberfläche von 200 ± 25, 300 ± 30 oder 380 ± 30 m²/g aufweisen. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Das in der erfindungsgemäßen Dispersion eingesetzte Siliziumdioxid weist eine Stampfdichte von bis zu 400 g/L, bevorzugt von 20 bis 300 g/L, besonders bevorzugt von 30 bis 200 g/L, ganz besonders bevorzugt von 40 bis 100 g/L auf. Stampfdichten verschiedener pulverförmiger oder grobkörniger granulärer Materialien können nach DIN ISO 787-11:1995 "Allgemeine Prüfverfahren für Pigmente und Füllstoffe - Teil 11: Bestimmung des Stampfvolumens und der Stampfdichte,, bestimmt werden. Dabei wird die Fülldichte einer Schüttung nach dem Rütteln und Stampfen gemessen.

Die erfindungsgemäße Dispersion kann außer Wasser, Siliziumdioxid und Trimethyl-1,6-Hexamethylendiamin auch andere Bestandteile, beispielsweise Lösungsmittel und diverse Additive enthalten. Der Anteil an Wasser in der erfindungsgemäßen wässrigen Dispersion kann von 50 bis 99, besonders bevorzugt von 60 bis 90 Gew.-% betragen.

Die erfindungsgemäße Dispersion kann bis zu 10 Gew.-% wenigstens eines organischen Lösungsmittels, ausgenommen N-Methylpyrrolidon, enthalten. Das Lösungsmittel wird bevorzugt aus der Gruppe bestehend aus aliphatischen, cycloaliphatischen und aromatischen Kohlenwasserstoffen, Alkoholen, Glycolen, Glycolethern, Ketonen, Estern und Ethern ausgewählt. Explizit seien n-Hexan, n-Heptan, Cyclohexan, Toluol, Xylol, Ethylbenzol, Cumol, Styrol, Dichlormethan, 1,2-Dichlorethan, Methanol, Ethanol, 1-Propanol, 2-Propanol, 1-Butanol, Isobutanol, 2-Ethylhexanol, Cyclohexanol, Diacetonalkohol, Aceton, Methylethylketon, Methylisobutylketon, Diisobutylketon, Cyclohexanon, Mesityloxid, Isophoron, Methylacetat, Methylacetat, Ethylacetat, Butylacetat, Butylether, Ethylacetat, Butylacetat, Isobutylacetat, Methylglycolacetat, Butylglycolacetat, Ethyldiglycolacetat, Butyldiglycolacetat, Methoxypropylacetat, Ethoxypropylacetat, Ethylencarbonat, Propylencarbonat, Diethylether, Methyl-tert-butylether, Tetrahydrofuran, Dioxan, 1-Methoxy-2-propanol, 1-Ethoxy-2-propanol, 1-lsopropoxy-2-propanol, 1-Isobutoxy-2-propanol, Ethylglycol, Propylglycol, Butylglycol, Ethyldiglycol, Butyldiglycol, Methyldipropylenglycol, Ethylenglycol, 1,2-Propylenlycol, 1,3-Butylenglycol, 2,4-Pentandiol, 2-Methyl-2,4-Pentandiol, 2,5-Hexandiol, 2,4-Heptandiol, 2-Ethyl-1,3-Hexandiol, Diethylenglycol, Dipropylenglycol, Tripropylenglycol, Hexandiol, Octandiol und Triethylenglycol genannt. Besonders bevorzugt können Diethylenglycol, Dipropylenglycol und Tripropylenglycol eingesetzt werden.

Die erfindungsgemäße Dispersion ist bevorzugt weitestgehend frei von Farbpigmenten und in der Lackindustrie eingesetzten Bindemitteln. In einer bevorzugten Ausführungsform der Erfindung beträgt der Anteil an Siliciumdioxid wenigstens 90 Gew.-%, besonders bevorzugt wenigstens 98 Gew.-%, am Feststoffanteil der Dispersion. Ganz besonders bevorzugt ist eine Ausführungsform, bei der die feste Phase der Dispersion vollständig aus Siliciumdioxid besteht.

Die erfindungsgemäße Dispersion kann außerdem bis zu 1 Gew.-% N-Methylpyrrolidon, enthalten.

In einer besonderen Ausführungsform der Erfindung werden von 5 bis 20 Gew.-%, bevorzugt von 8 bis 15 Gew.-%, jeweils bezogen auf den Anteil an Siliciumdioxid, eines Alkoholalkoxylates der allgemeinen Formel R¹O((CH₂)ₘO)ₙH in der erfindungsgemäßen Dispersion eingesetzt. Die besten lacktechnischen Ergebnisse werden für eine oder mehrere Verbindungen der allgemeinen Formel R¹O((CH₂)ₘO)ₙH mit R¹ = CH₃(CH₂)ₓCH₂O mit x = 8 - 18, m = 1 - 4 und n = 15 - 25 erhalten. Explizit seien

CH₃(CH₂)₁₀CH₂O[(CH₂)₂O]₁₈H, CH₃(CH₂)₁₂CH₂O[(CH₂)₂O]₁₈H,

CH₃(CH₂)₁₄CH₂O[(CH₂)₂O]₁₈H, CH₃(CH₂)₁₆CH₂O[(CH₂)₂O]₁₈H,

CH₃(CH₂)₁₀CH₂O[(CH₂)₂O]₂₀H; CH₃(CH₂)₁₂CH₂O[(CH₂)₂O]₂₀H,

CH₃(CH₂)₁₄CH₂O[(CH₂)₂O]₂₀H, CH₃(CH₂)₁₆CH₂O[(CH₂)₂O]₂₀H,

CH₃(CH₂)₁₀CH₂O[(CH₂)₂O]₂₃H, CH₃(CH₂)₁₂CH₂O[(CH₂)₂O]₂₃H,

CH₃(CH₂)₁₄CH₂O[(CH₂)₂O]₂₃H und CH₃(CH₂)₁₆CH₂O[(CH₂)₂O]₂₃H genannt.

Die erfindungsgemäße Dispersion kann weiterhin andere als Trimethyl 1,6-Hexamethylendiamin Amine und/oder Aminoalkohole enthalten. Ihr Anteil beträgt bevorzugt von 3 bis 20 Gew.-%, besonders bevorzugt von 5 bis 15 Gew.-%, jeweils bezogen auf den Anteil an Siliciumdioxid.

Mit dem Ausdruck Aminoalkohol ist eine Verbindung gemeint, welche wenigstens eine Aminogruppe und wenigstens eine Hydroxylgruppe enthält. Das Molekulargewicht des Aminoalkohols zur Verwendung in der vorliegenden Erfindung beträgt bevorzugt von 50 bis 500, besonders bevorzugt von 100 bis 250 g/mol. Geeignete Aminoalkohole sind 2-Aminoethanol, 1-Aminoethanol, 3-Amino-1-propanol, 2-Amino-1-propanol, 1-Amino-2-propanol, 2-Amino-2-methyl-1-propanol, 2-Amino-2-methyl-1,3-propandiol, 2-Amino-2-hydroxymethyl-1,3-propandiol, 2-(2-Amino-ethoxy)ethanol, 2-Amino-1-butanol, 4-Amino-1-butanol, 1-Amino-2-butanol, 1-Amino-3-butanol, 3-Amino-1-butanol, 2-Amino-1-cyclohexanol, 3-Amino-1-cyclohexanol, 4-Amino-1-cyclohexanol, 2-Amino-1-(hydroxymethyl)cyclopentan, 2-Amino-1-hexanol, 6-Amino-1-hexanol, 2-Amino-3-methyl-1-butanol, 1-(Aminomethyl)-cyclohexanol, 6-Amino-2-methyl-2-heptanol, 2-Amino-3-methyl-1-pentanol, 2-Amino-4-methyl-1-pentanol, 2-Amino-1-pentanol, 5-Amino-1-pentanol, 1-Amino-2,3-propandiol, 2-Amino-1,3-propandiol, 2-Amino-1,3-propandiol, 2-((3-Aminopropyl)-methyl-amino)-ethanol oder deren Gemische.

Weiterhin können Aminoalkohole des Types (CH₃)₂NCHR₁CHR₂-O-[CHR₃-CHR₄-O]ₙH, in denen R₁, R₂, R₃ und R₄ jeweils für H, CH₃ oder C₂H₅ und n für 1 - 5 stehen kann, wobei R₁, R₂, R₃ und R₄ jeweils gleich oder verschieden sein können. Beispielhaft seien 1-(2-dimethylaminoethoxy)2-propanol, 1-(1-dimethylamino-2-propoxy)-2-propanol, 2-(1-dimethylamino-2-propoxy)ethanol, 2-(2-dimethylaminoethoxy)ethanol und 2-[2-(2-dimethylaminoethoxy)ethoxy]ethanol Bestandteil der erfindungsgemäßen Dispersion sein.

Besonders bevorzugt sind N,N-Dialkylalkanolaminen wie N,N-Dimethylethanolamin und N,N-Dimethylisopropanolamin.

Die erfindungsgemäße Dispersion kann weiterhin von 0,1 bis 1,5 Gew.-% mindestens eines Polyethylenglycoles und/oder Polypropylenglycoles enthalten. Bevorzugt sind Polypropylenglycole mit einem mittleren Molekulargewicht (Massenmittel) von 100 g/mol oder mehr, besonders bevorzugt von 150 bis 6000 g/mol.

Es hat sich als vorteilhaft gezeigt, wenn die erfindungsgemäße Dispersion weiterhin von 0,1 bis 1 Gew.-%, bezogen auf den Anteil an Siliciumdioxid, mindestens eines Copolymeren der allgemeinen Formel I 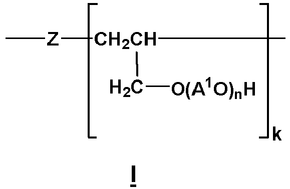 enthält, mit Z = 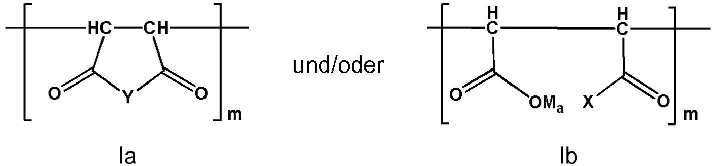 mit
- M: Wasserstoff, ein- oder zweiwertiges Metallkation, Ammoniumion, organischer Aminrest,
- a: 1, oder für den Fall, dass M ein zweiwertiges Metallkation ist, a = 0,5
- X: ebenfalls -OMₐ oder -O-(CₚH₂ₚO)_{q}-R¹ mit

- R¹: H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen, p = 2 - 4, q = 0 -100, -NHR² und/oder-NR²₂ mit R² = R¹ oder-CO-NH₂

- Y: O, NR²
- A¹: Ethylenrest, Propylenrest, iso-Propylenrest, Butylenrest,
- m: 10-30,
- n: 0-50,
- k: 10 - 30, wobei die Summe
- m+k: im Bereich von 20 - 60, vorzugsweise von 20 - 40 liegt.

-(A¹O)ₙ- kann sowohl ein Homopolymerisat aus einer der genannten Alkylenoxide als auch ein Block-Copolymerisat oder Co-Polymerisat mit statistischer Verteilung von zwei oder mehreren der Monomeren im Polymermolekül sein. Die Einheiten [ ]ₘ und [ ]ₖ können ebenfalls als Block-Copolymerisate oder Co-Polymerisate mit statistischer Verteilung von zwei oder mehreren der Monomeren im Polymermolekül vorliegen.

Als ein- oder zweiwertiges Metallkation M finden vorzugsweise Natrium-, Kalium-, Calcium-, Magnesiumionen Verwendung. Als organische Aminreste werden vorzugsweise substituierte Ammoniumgruppen eingesetzt, die sich ableiten von primären, sekundären oder tertiären C₁- bis C₂₀-Alkylaminen, C₁- bis C₂₀-Alkanolaminen, C₅- bis C₈-Cycloalkylaminen und C₆- bis C₁₄-Aryiaminen. Beispiele für entsprechende Amine sind Methlylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium)-Form.

X kann bedeuten -OMₐ oder -O-(CₚH₂ₚO)_{q}-R¹ mit R¹ = H, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der gegebenenfalls noch substituiert sein kann. p kann sein von 2 bis 4, q = 0 bis 100, wobei in einer bevorzugten Ausführungsform p = 2 oder 3 ist, und sich dadurch von Polyethylenoxid oder Polypropylenoxid ableitet. Alternativ kann X noch -NHR² und/oder-NR²₂ mit R² = R¹ oder -CO-NH₂ bedeuten, was den mono- oder disubstituierten Monoamiden der entsprechenden ungesättigten Carbonsäure entspricht. Y kann O (Säureanhydrid) oder NR² (Säureimid) bedeuten.

Bevorzugt kann ein Copolymeres der allgemeinen Formel la oder Ib eingesetzt werden, wobei A¹ ein Ethylenrest ist, m 10 bis 30, n 5 bis 20, k 10 bis 30 und wobei die Summe m + k im Bereich von 20 bis 40 liegt.

Bevorzugt können auch Verbindungen mit der allgemeinen Formel la oder Ib eingesetzt werden, bei denen R ein gegebenenfalls verzweigter, gegebenenfalls Mehrfachbindungen, gegebenenfalls Hydroxylgruppen enthaltender Akylrest mit 8 bis 18 C-Atomen, A ein Ethylenrest, M = H oder ein Alkalimetall, a 1 bis 30, b 1 oder 2, bedeuten.

Als besonders für lacktechnische Anwendungen geeignet, hat sich eine Dispersion herausgestellt, welche wenigstens ein Alkoholalkoxylat der allgemeinen Formel R¹O((CH₂)ₘO)ₙH, wenigstens ein Polypropylenglycol mit einem mittleren Molekulargweicht von 100 bis 6000 g/mol und wenigstens ein Copolymeres der allgemeinen Formel I enthält. Die Gewichtsverhältnisse Alkoholalkoxylat / Polypropylenglycol / Copolymer betragen dabei bevorzugt 50 - 70 / 15 - 30/ 10-20, wobei sich diese zu 100 addieren.

Schließlich können der erfindungsgemäßen Dispersion noch Entschäumungsmittel und Konservierungsmittel zugesetzt sein. Ihr Anteil an der Dispersion liegt in der Regel bei unter 1 Gew.-%.

Ein weiterer Gegenstand der Erfindung ist eine Lackzubereitung, welche die erfindungsgemäße Dispersion enthält.

Geeignete Bindemittel hierbei können, die in der Lack- und Beschichtungstechnologie üblichen Harze, wie sie zum Beispiel in "Lackharze, Chemie, Eigenschaften und Anwendungen, Hrsg. D. Stoye, W. Freitag, Hanser Verlag, München, Wien 1996", beschrieben sind, sein.

Beispielhaft zu nennen sind unter anderem die Polymerisate und Copolymerisate der (Meth)acrylsäure und deren gegebenenfalls weitere funktionelle Gruppen tragenden Ester mit weiteren ungesättigten Verbindungen, wie zum Beispiel Styrol, Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte Alkydharze.

Weiterhin können als Polymerkomponenten organische, Hydroxylgruppen tragende Verbindungen eingesetzt werden, zum Beispiel Polyacrylat-, Polyester-, Polycaprolacton-, Polyether-, Polycarbonat-, Polyurethanpolyole und hydroxyfunktionelle Epoxidharze sowie beliebige Mischungen dieser Polymeren. Insbesondere werden wässrige oder lösemittelhaltige beziehungsweise lösemittelfreie Polyacrylat- und Polyesterpolyole sowie deren beliebige Mischungen eingesetzt.

Polyacrylatpolyole sind Copolymerisate von Hydroxylgruppen aufweisenden Monomeren mit anderen olefinisch ungesättigten Monomeren, wie zum Beispiel Ester der (Meth)acrylsäure, Styrol-, alpha-Methylstyrol, Vinyltoluol, Vinylester, Malein- und Fumarsäuremono- und -dialkylester, alpha-Olefine und weiteren ungesättigten Oligomeren und Polymeren.

Die erfindungsgemäße Lackzubereitung kann weiterhin Farbpigmente und/oder inaktive Füllstoffe enthalten.

Die Farbpigmente können organischer oder anorganischer Natur sein. Beispielhaft seien Bleioxide, Bleisilikate, Eisenoxide, Phthalocyaninkomplexe, Titandioxide, Zinkoxide, Zinksulfid, Wismutvanadat, Spinell-Mischoxide, beispielsweise Titan-Chrom, Titan-Nickel, Zinn-Zink Spinell-Mischoxide, plättchenförmige Metallic- oder Interferenz-Pigmente sowie Ruße genannt.

Die erfindungsgemäße Lackzubereitung kann weiterhin inaktive Füllstoffe enthalten. Unter inaktiven Füllstoffen sind dem Fachmann bekannte Füllstoffe zu verstehen, die die rheologischen Eigenschaften der Zubereitung nicht oder nur unwesentlich beeinflussen. Beispielhaft seien Calciumcarbonat, Diatomeenerde, Glimmer, Kaolin, Kreide, Quarz und Talkum genannt.

Farbpigmente und/oder inaktive Füllstoffe liegen üblicherweise in Anteilen von in Summe 10 bis 70 Gew.-%, bevorzugt von 30 bis 50 Gew.-%, bezogen auf den Gesamtfeststoffanteil der Zubereitung, vor.

Der Gesamtfeststoffanteil der Lackzubereitung, der sich aus Siliziumdioxidpartikeln, Bindemittel und gegebenenfalls Farbpigmenten und inaktiven Füllstoffen zusammensetzt, beträgt vorzugsweise von 10 bis 80 Gew.-%, besonders bevorzugt von 20 bis 70 Gew.-%, ganz besonders bevorzugt von 30 bis 60 Gew.-%, bezogen auf die Gesamtmasse der Lackzubereitung.

Ein weiterer Gegenstand der Erfindung ist die Verwendung der Dispersion gemäß der Erfindung als Zusatz zu Hydrofüllern in der Automobilindustrie, als Beschichtungsbestandteil in Can- und Coil-Coating-Verfahren und als Additiv in wasserbasierten UV-härtbaren Formulierungen.

Ein weiterer Gegensand der Erfindung ist ein Verfahren zur Herstellung der erfindungsgemäßen Dispersion, indem das Gemisch umfassend Siliziumdioxid, Wasser und 2,2,4-Trimethyl 1,6-Hexamethylendiamin und/oder 2,4,4-Trimethyl 1,6-Hexamethylendiamin gerührt wird.

Das Verfahren gemäß der Erfindung kann beispielsweise in einer Dispergiervorrichtung ausgeführt werden. Als eine solche Dispergiervorrichtung zur Herstellung der erfindungsgemäßen Dispersion eignet sich jede Vorrichtung, die in der Lage ist, eine intensive Benetzung des pulverförmigen oder granulären Siliziumdioxids mit der wässerigen Phase zu ermöglichen. In der Lackindustrie werden hierzu üblicherweise die sogenannten Dissolver verwendet, deren relativ einfacher Aufbau eine wartungsarme und leicht zu reinigende Produktionsweise ermöglicht. Je nach geforderter Viskosität oder auch Füllgrad der zu erzeugenden wässrigen Dispersion ist jedoch noch ein intensives Dispergieren oder Nachvermahlen notwendig. Das Nachvermahlen kann beispielsweise in Rührwerkskugelmühlen erfolgen. Vielfach reicht jedoch eine intensive Scherung mit Hilfe von Rotor/Stator-Maschinen aus. Eine zweckdienliche Kombination aus Benetzung- und Dispergiermöglichkeit stellen die Rotor/Stator-Maschinen der Firma Ystral dar, die es ermöglichen, das Pulver einzusaugen und nach dem Schließen der Pulver-Einsaugöffnung intensiv scherend zu dispergieren.

Das Verfahren der vorliegenden Erfindung wird bevorzugt bei einer Rührgeschwindigkeit von über 500 UpM (Umdrehungen pro Minute), besonders bevorzugt von 1000 bis 10000 UpM, ganz besonders bevorzugt von 2000 bis 8000 UpM durchgeführt.

Insbesondere beim Einsatz von Rotor/Stator-Maschinen, bei denen es zum Einsaugen von Luft und daher zu Schaumbildung kommen kann, hat es sich als vorteilhaft erwiesen, nur einen Teil des benötigten Wassers und die Additive vorzulegen und einen Teil des Siliziumdioxides einzuarbeiten. Ab einer bestimmten Menge Siliziumdioxides von circa 25 - 30 Gew.-%, bezogen auf das insgesamt einzuarbeitende Siliciumdioxid, ist dessen entschäumende Wirkung festzustellen. Erst nach Zugabe der gesamten Pulvermenge werden anschließend die noch fehlenden Anteile Wasser hinzugegeben. Es wird dadurch ein ausreichendes Volumen für die anfängliche Schaumbildung beim Beginn der Pulverzugabe im Ansatzbehälter vorgehalten.

### Beispiele

### Vergleichsbeispiele 1-4 und Beispiele 1-3

Die Herstellung aller Dispersionen aus den Vergleichsbeispielen 1-4 und erfindungsgemäßen Beispielen 1-3 erfolgte, indem das Siliziumdioxid zunächst unter Rühren mit einem Dissolver (ATP DISPERMILL Vango 100) bei 4000 UpM innerhalb von 30 Min ins Wasser eingearbeitet wurde um eine 25 %-ige SiO₂ Dispersion zu erhalten. Diese 25 %-ige wässrige SiO₂ Dispersion wurde entsprechend der gewünschten Endzusammensetzung mit Wasser und Amin vermischt und mit einem Rotor-Stator Disperser Polytron PT 6100 der Firma Kinematica AG bei 6000 UpM innerhalb von 30 Min nachdispergiert.

Die dynamische Viskosität (Scherviskosität) der erhaltenen Dispersionen wurde mittels eines Rheometers (Anton Paar MCR100) bei Rotationsgeschwindigkeit von sec⁻¹ (1 Umdrehung pro Sekunde) bestimmt.

Die eingesetzten Mengen und Anteile an SiO₂ und jeweiligen Aminen, pH der resultierenden Dispersionen und deren Viskosität sind in der nachfolgenden Tabelle 1 zusammengefasst:

**Tabelle 1**

| Beispiel | Vergl.-Bsp 1 | Vergl.-Bsp 2 | Vergl.-Bsp 3 | Vergl.-Bsp 4 | 1 | 2 | 3 |
|---|---|---|---|---|---|---|---|
| Amin | DMAE¹⁾ | HMDA²⁾ | IPD³⁾ | IPD³⁾ | TMD⁴⁾ | TMD⁴⁾ | TMD⁴⁾ |
| Gew.-% Amin | 1 | 0,63 | 0,95 | 0,95 | 0,9 | 0,9 | 3,55 |
| Gew.-% SiO₂⁵⁾ | 10 | 10 | 10 | 20 | 10 | 20 | 20 |
| SiO₂⁵)/Amin⁶⁾ [mol/mol] | 14,9 | 30,8 | 29,9 | 59,8 | 29,3 | 58,6 | 14,9 |
| pH | 10,6 | 11,4 | 10,8 | 11,2 | 11,0 | 11,3 | 11,4 |
| Viskosität bei sec⁻¹ [mPa*s] | 3 | 22 | 3 | 4 | 1600 | 17500 | Fest⁷⁾ |

| | | | | | | | |
|---|---|---|---|---|---|---|---|
| ¹⁾ DMAE = N,N-Dimethylaminoethanol [CAS Nr 108-01-0, Mr = 89,1 g/mol] ²⁾ HMDA = 1,6-Hexamethylendiamin [CAS Nr 124-09-4, Mr = 116,2 g/mol] ³⁾ IPD = Isophorondiamin [CAS Nr 2855-13-2, Mr = 170,3 g/mol] ⁴⁾ TMD = Isomerengemisch von 2,2,4-Trimethyl 1,6-Hexamethylendiamin und 2,4,4-Trimethyl 1,6-Hexamethylendiamin [Mr = 158,3 g/mol] zu etwa gleichen Teilen (50 Gew.- % / 50 Gew.-%) erhältlich von Evonik Ressource Efficiency GmbH unter dem Namen VESTAMIN^{®} TMD. ⁵⁾ SiO₂ = pyrogen hergestelltes Siliziumdioxid AEROSIL^{®} 200 (BET = 200 m²/g) von Evonik Ressource Efficiency GmbH. ⁶⁾ Der Begriff "Amin" bezieht sich auf die jeweils eingesetzten Amine (DMAE, HMDA, IPD und TMD). ⁷⁾ Viskosität des Gemisches kann nicht gemessen werden, da es sich verfestigt. | | | | | | | |

Die erfindungsgemäßen Beispiele 1-3 zeigen deutlich, dass TMD völlig überraschend eine viel höhere Verdickungswirkung aufweist als die strukturell sehr ähnlichen 1,6-Hexamethylendiamin (Vergleichsbeispiel 2) und Isophorondiamin (Vergleichsbeispiele 3 und 4) unter ansonsten gleichen übrigen Bestandteilen der Dispersionen und gleichen Testbedingungen.

## Patentansprüche

1. Wässrige Dispersion, umfassend Siliziumdioxid und 2,2,4-Trimethyl 1,6-Hexamethylendiamin und/oder 2,4,4-Trimethyl 1,6-Hexamethylendiamin **dadurch gekennzeichnet, dass** sie einen pH Wert von 10 bis 12 aufweist, und dass das Siliziumdioxid aus der Gruppe bestehend aus pyrogen hergestelltes Siliziumdioxid ausgewählt wird, wobei das Siliziumdioxid eine Stampfdichte von bis zu 400 g/L, gemessen nach DIN ISO 787-11:1995, aufweist

2. Dispersion nach Anspruch 1,
umfassend von 1 bis 30 Gew.-% Siliziumdioxid.

3. Dispersion nach einem der Ansprüche 1 bis2,
umfassend von 0,01 bis 10 Gew.-% von 2,2,4-Trimethyl 1,6-Hexamethylendiamin und/oder 2,4,4-Trimethyl 1,6-Hexamethylendiamin.

4. Dispersion nach einem der Ansprüche 1 bis 3, **dadurch gekennzeichnet, dass** die Siliziumdioxidpartikel eine nummerische mittlere Partikelgröße d₅₀ von höchstens 300 nm aufweisen.

5. Dispersion nach einem der Ansprüche 1 bis 4, **dadurch gekennzeichnet, dass** das Molarverhältnis von SiO₂ zu 2,2,4-Trimethyl 1,6-Hexamethylendiamin und/oder 2,4,4-Trimethyl 1,6-Hexamethylendiamin in der Dispersion von 5 bis 100 beträgt

6. Dispersion nach einem der Ansprüche 1 bis 5, **dadurch gekennzeichnet, dass** das Molarverhältnis von SiO₂ zu Wasser in der Dispersion von 0,001 bis 0,5 beträgt

7. Dispersion nach einem der Ansprüche 1 bis 6, **dadurch gekennzeichnet, dass** Siliziumdioxid eine Methanolbenetzbarkeit von kleiner 20 Gew.-% Methanol in einem Methanol-Wasser Gemisch aufweist.

8. Dispersion nach einem der Ansprüche 1 bis 7, **dadurch gekennzeichnet, dass** Siliziumdioxid eine Hydroxylgruppendichte von 1,2 bis 5,4 OH/nm² aufweisen.

9. Dispersion nach einem der Ansprüche 1 bis 8, **dadurch gekennzeichnet, dass** Siliziumdioxidpartikel eine BET Oberfläche von 20 bis 500 m²/g aufweisen.

10. Dispersion nach einem der Ansprüche 1 bis 9, **dadurch gekennzeichnet, dass** sie 2,2,4-Trimethyl-1,6-Hexamethylendiamin und 2,4,4-Trimethyl-1,6-Hexamethylendiamin enthält, wobei das Molarverhältnis von 2,2,4-Trimethyl-1,6-Hexamethylendiamin zu 2,4,4-Trimethyl-1,6-Hexamethylendiamin von 0,8 bis 1,2 ist.

11. Lackzubereitung enthaltend die Dispersion gemäß einem der Ansprüche 1 bis 10.

12. Verwendung der Dispersion gemäß einem der Ansprüche 1 bis 10 als Zusatz zu
Hydrofüllern in der Automobilindustrie, als Beschichtungsbestandteil in Can- und Coil-Coating-Verfahren, als Additiv in wasserbasierten UV-härtbaren Formulierungen sowie in Klarlacken.

13. Verfahren zur Herstellung der Dispersion nach einem der Ansprüche 1 bis 10, **dadurch**
**gekennzeichnet, dass** das Gemisch umfassend Siliziumdioxid, Wasser und 2,2,4-Trimethyl 1,6-Hexamethylendiamin und/oder 2,4,4-Trimethyl 1,6-Hexamethylendiamin gerührt wird.

## Claims

1. Aqueous dispersion, comprising silicon dioxide and 2,2,4-trimethyl-1,6-hexamethylenediamine and/or 2,4,4-trimethyl-1,6-hexamethylenediamine, **characterized in that** it has a pH of 10 to 12 and **in that** the silicon dioxide is selected from the group consisting of pyrogenic silicon dioxide, wherein the silicon dioxide has a tamped density of up to 400 g/L measured according to DIN ISO 787-11:1995.

2. Dispersion according to Claim 1,
comprising from 1% to 30% by weight of silicon dioxide.

3. Dispersion according to either of Claims 1 to 2, comprising from 0.01% to 10% by weight of 2,2,4-trimethyl-1,6-hexamethylenediamine and/or 2,4,4-trimethyl-1,6-hexamethylenediamine.

4. Dispersion according to any of Claims 1 to 3, **characterized in that** the silicon dioxide particles have a numerical average particle size dso of not more than 300 nm.

5. Dispersion according to any of Claims 1 to 4, **characterized in that** the molar ratio of SiO₂ to 2,2,4-trimethyl-l,6-hexamethylenediamine and/or 2,4,4-trimethyl-1,6-hexamethylenediamine in the dispersion is from 5 to 100.

6. Dispersion according to any of Claims 1 to 5, **characterized in that** the molar ratio of SiO₂ to water in the dispersion is from 0.001 to 0.5.

7. Dispersion according to any of Claims 1 to 6, **characterized in that** the silicon dioxide has a methanol wettability of less than 20% by weight of methanol in a methanol/water mixture.

8. Dispersion according to any of Claims 1 to 7, **characterized in that** the silicon dioxide has a hydroxyl density of 1.2 to 5.4 OH/nm².

9. Dispersion according to any of Claims 1 to 8, **characterized in that** the silicon dioxide particles have a BET surface area of 20 to 500 m²/g.

10. Dispersion according to any of Claims 1 to 9, **characterized in that**
it contains 2,2,4-trimethyl-1,6-hexamethylenediamine and 2,4,4-trimethyl-1,6-hexamethylenediamine, wherein the molar ratio of 2,2,4-trimethyl-1,6-hexamethylenediamine to 2,4,4-trimethyl-1,6-hexamethylenediamine is from 0.8 to 1.2.

11. Lacquer preparation containing the dispersion according to any of Claims 1 to 10.

12. Use of the dispersion according to any of Claims 1 to 10 as an additive to hydrofillers in the automotive industry, as a coating constituent in can- and coil-coating processes, as an additive in water-based UV-curable formulations and in clear lacquers.

13. Process for producing the dispersion according to any of Claims 1 to 10, **characterized in that** it comprises stirring the mixture comprising silicon dioxide, water and 2,2,4-trimethyl-1,6-hexamethylenediamine and/or 2,4,4-trimethyl-1,6-hexamethylenediamine.

## Revendications

1. Dispersion aqueuse, comprenant du dioxyde de silicium et de la 2,2,4-triméthyl-1,6-hexaméthylènediamine et/ou de la 2,4,4-triméthyl-1,6-hexaméthylènediamine, **caractérisée en ce qu'**elle présente un pH de 10 à 12, et **en ce que** le dioxyde de silicium est choisi dans le groupe consistant en le dioxyde de silicium fabriqué par pyrogénation, le dioxyde de silicium présentant une masse volumique apparente après tassement allant jusqu'à 400 g/L, mesurée selon DIN ISO 787-11:1995.

2. Dispersion selon la revendication 1, comprenant de 1 à 30 % en poids de dioxyde de silicium.

3. Dispersion selon l'une des revendications 1 à 2, comprenant de 0,01 à 10 % en poids de 2,2,4-triméthyl-1,6-hexaméthylènediamine et/ou de 2,4,4-triméthyl-1,6-hexaméthylènediamine.

4. Dispersion selon l'une des revendications 1 à 3, **caractérisée en ce que** les particules de dioxyde de silicium présentent une granulométrie moyenne en nombre dso d'au plus 300 nm.

5. Dispersion selon l'une des revendications 1 à 4, **caractérisée en ce que** le rapport en moles du SiO₂ à la 2,2,4-triméthyl-1,6-hexaméthylènediamine et/ou à la 2,4,4-triméthyl-1,6-hexaméthylènediamine dans la dispersion est de 5 à 100.

6. Dispersion selon l'une des revendications 1 à 5, **caractérisée en ce que** le rapport en moles du SiO₂ à l'eau dans la dispersion est de 0,001 à 0,5.

7. Dispersion selon l'une des revendications 1 à 6, **caractérisée en ce que** le dioxyde de silicium présente une mouillabilité au méthanol inférieure à 20 % en poids de méthanol dans un mélange méthanol-eau.

8. Dispersion selon l'une des revendications 1 à 7, **caractérisée en ce que** le dioxyde de silicium présente une densité des groupes hydroxyle de 1,2 à 5,4 OH/nm².

9. Dispersion selon l'une des revendications 1 à 8, **caractérisée en ce que** les particules de dioxyde de silicium ont une aire BET de 20 à 500 m²/g.

10. Dispersion selon l'une des revendications 1 à 9, **caractérisée en ce qu'**elle contient de la 2,2,4-triméthyl-1,6-hexaméthylènediamine et de la 2,4,4-triméthyl-1,6-hexaméthylènediamine, le rapport en moles de la 2,2,4-triméthyl-1,6-hexaméthylènediamine à la 2,4,4-triméthyl-1,6-hexaméthylènediamine étant de 0,8 à 1,2.

11. Préparation de vernis contenant la dispersion selon l'une des revendications 1 à 10.

12. Utilisation de la dispersion selon l'une des revendications 1 à 10 comme additif à des matières de charge aqueuses dans l'industrie automobile, comme constituant de revêtement dans des procédés de revêtement de fer blanc et de laquage en bande, comme additif dans des formulations à l'eau durcissables aux UV, ainsi que dans des vernis transparents.

13. Procédé de fabrication de la dispersion selon l'une des revendications 1 à 10, **caractérisée en ce que** le mélange comprenant du dioxyde de silicium, de l'eau et de la 2,2,4-triméthyl-1,6-hexaméthylènediamine et/ou de la 2,4,4-triméthyl-1,6-hexaméthylènediamine est soumis à une agitation.
